# FASCICULE DE BREVET EUROPEEN

(11) **EP 1 382 877 B1**
(45) Date de publication et mention de la délivrance du brevet: **07.12.2005**
(21) Numéro de dépôt: 03291626.4
(22) Date de dépôt: 02.07.2003
(51) Int. Cl.: F16D 55/36

(54) **Système de freinage pour roues d'aéronef**
Flugzeugbremssystem
Aircraft multi-disc brake system

(30) Priorité: 19.07.2002 FR 0209196
(43) Date de publication de la demande: 21.01.2004
(73) Titulaire: MESSIER-BUGATTI, 78140 Velizy Villacoublay (FR)
(72) Inventeur: Souetre, Jean, 92100 Boulogne-Billancourt (FR); Durollet, Thomas, 78280 Guyancourt (FR); Dereure, Olivier, 75015 Paris (FR)
(74) Mandataire: Jaunez, Xavier

(56) Documents cités:
- EP-A- 0 990 813
- WO-A-03/021126
- US-A- 6 003 641

## Description

### DOMAINE DE L'INVENTION

La présente invention concerne un système de freinage pour roues d'aéronef, du type comportant pour chaque roue une partie centrale statorique entourant coaxialement un essieu de roue sur lequel est montée pour tourner une partie annulaire rotorique, et une succession de disques de frein agencés entre la partie centrale statorique et la partie annulaire rotorique en étant alternativement couplés en rotation à l'une ou l'autre desdites parties.

### ARRIERE-PLAN DE L'INVENTION

De tels systèmes de freinage à empilement de disques (généralement réalisés en carbone) sont largement utilisés sur les aéronefs de conception récente. D'une façon générale, la partie centrale statorique comporte une couronne de freinage ou analogue équipée d'une pluralité d'ensembles de pistons et, rigidement solidaire de ladite couronne, un tube de torsion. Cette partie statorique est supportée sur l'essieu concerné d'une part au niveau de la couronne de freinage, et d'autre part au niveau d'un voile annulaire transversal présent intérieurement dans le tube de torsion. Une portée de centrage est alors interposée entre le voile annulaire et l'essieu. On pourra par exemple se référer aux documents US-A-6 003 641 et EP-A-0 990 813.

Dans les trains d'atterrissage traditionnels, il est prévu une jambe de train avec une tige télescopique en extrémité de laquelle est articulé un balancier portant des paires de roues. Le balancier est ainsi monté articulé sur une chape solidaire de l'extrémité inférieure de la tige télescopique, et une barre est interposée entre la couronne de freinage et l'une des branches de la chape précitée pour la reprise des efforts de torsion générés lors du freinage.

Lorsque le système de freinage est actionné par le pilote, les essieux sont soumis à des flexions simples dans deux directions perpendiculaires, ce qui correspond à deux modes propres couplés. Par ailleurs, la structure qui entoure l'essieu est également soumise à des efforts de flexion du même type, générant des déformations dynamiques de même type, qui se produisent avec un léger retard de phase par rapport aux déformations de l'essieu. Les deux modes couplés se combinent pour générer un mode instable, et les spécialistes savent que si les deux modes sont proches en fréquences, la probabilité est élevée pour que ces deux modes se combinent en un mode instable. C'est ainsi qu'est apparue l'approche visant à éloigner les modes propres pour empêcher l'apparition du mode instable résultant.

Il a été proposé d'agir hydrauliquement sur la couronne de freinage en utilisant un laminage de fluide hydraulique qui produit un amortissement. Cependant, une telle solution, outre sa complexité, n'est pas satisfaisante en termes de fiabilité, en particulier en cas de panne hydraulique.

On a alors cherché à jouer sur la raideur du tube de torsion en utilisant des matériaux différents agencés en sandwich. Ceci permet théoriquement d'adapter la raideur axiale du tube de torsion ou de la structure environnante. Cependant, cette approche est extrêmement délicate pour contrôler fiablement les raideurs dans des directions différentes.

Une solution plus intéressante a été récemment proposée, illustrée par le document WO-A-03/021126 (publié postérieurement à la date de priorité de la présente demande), visant à profiter de la présence du voile annulaire transversal en imposant audit voile un comportement particulier et non uniforme. En effet, contrairement aux conceptions classiques selon lesquelles le voile annulaire transversal est régulièrement percé de trous circulaires, cette solution s'est orientée vers l'agencement de lumières allongées circonférentiellement, générant une dissymétrie. L'essieu est alors retenu sur une portion de circonférence avec une rigidité plus importante dans une zone que dans la zone résiduelle associée à la présence de lumières circonférentielles. Par un choix judicieux de l'amplitude angulaire de ces lumières circonférentielles et de leur position par rapport aux axes principaux, cette solution semble permettre d'abaisser le mode de basse fréquence. Néanmoins, une telle approche a pour inconvénient d'affaiblir la résistance mécanique du voile annulaire transversal. D'ailleurs, la modification des raideurs radiales induit également une modification de la raideur axiale, ce qui n'est également pas favorable en l'espèce sur le plan structurel.

### OBJET DE L'INVENTION

La présente invention a pour but de concevoir un système de freinage qui est lui aussi agencé pour obtenir des modes propres différents, ce qui est en particulier favorable pour supporter les déformations de tournoiement (« whirl » pour les anglo-saxons) que l'on rencontre dans les structures de freinage pour les essieux et la structure entourant lesdits essieux.

L'invention a ainsi pour objet de concevoir un système de freinage agencé pour présenter un comportement anti-vibratoire optimal, en particulier au regard du tournoiement.

### DEFINITION GENERALE DE L'INVENTION

Ce problème est résolu par un système de freinage pour les roues portées par une jambe de train d'un train d'atterrissage d'aéronef, du type comportant pour chaque roue une partie centrale statorique entourant coaxialement un essieu de roues sur lequel est montée pour tourner une partie annulaire rotorique, et une succession de disques de frein agencés entre la partie centrale statorique et la partie annulaire rotorique en étant alternativement couplés en rotation à l'une ou l'autre desdites parties, ladite partie centrale statorique comportant une couronne de freinage équipée d'une pluralité d'ensembles de pistons et, rigidement solidaire de ladite couronne, un tube de torsion présentant intérieurement un voile annulaire transversal, une portée de centrage étant interposée entre le voile annulaire et l'essieu, ledit système de freinage étant remarquable en ce que la portée de centrage présente des caractéristiques structurelles qui varient circonférentiellement selon une répartition propre à générer des raideurs d'appui différentes dans deux axes orthogonaux contenus dans un plan perpendiculaire à l'axe de l'essieu, et respectivement perpendiculaire et parallèle à l'axe principal de la jambe de train.

Ainsi, contrairement à la solution antérieure rappelée précédemment qui prévoyait des lumières circonférentielles dans le voile annulaire transversal, c'est la portée de centrage qui assure maintenant la fonction de garantir des modes propres différents selon deux axes orthogonaux, en vue notamment d'un comportement très favorable au regard du tournoiement, le voile annulaire transversal restant quant à lui conforme aux réalisations traditionnelles, c'est-à-dire n'étant aucunement affaibli mécaniquement.

Conformément à un premier mode d'exécution, les caractéristiques structurelles de la portée de centrage qui varient circonférentiellement concernent l'épaisseur radiale, de façon à définir au moins une portée annulaire partielle. En particulier, il sera prévu un nombre pair de portées annulaires partielles, qui sont deux à deux diamétralement opposées.

De préférence, la ou les portées annulaires partielles concernent une plage angulaire essentiellement comprise entre 15° et 60°.

On pourra en outre prévoir que la ou les portées annulaires partielles sont décalées angulairement pour être centrées sur une direction correspondant sensiblement à une direction horizontale ou verticale réelle. Ceci permet de tenir compte de l'inclinaison que l'on trouve fréquemment pour la jambe de train par rapport à la verticale en position train bas, afin d'avoir des raideurs différentes selon des axes perpendiculaires qui correspondent essentiellement aux directions horizontale et verticale réelles.

Plus précisément, le système de freinage auquel s'attache l'invention est un système dans lequel la portée de centrage est définie par un pied de tube qui est d'une pièce avec le voile annulaire transversal, et au moins une bague annulaire associée au pied de tube ou à l'essieu.

Les portées annulaires partielles pourront alors être prévues sur le pied de tube, en étant définies par un détalonnage localisé dudit pied de tube, ou en variante être prévues sur une bague annulaire associée au pied de tube, en étant définies par un détalonnage localisé de ladite bague annulaire, ou dans une autre variante être prévues sur une bague annulaire associée à l'essieu, en étant définies par un détalonnage localisé de ladite bague annulaire, ou encore dans une autre variante être prévues sur l'essieu, en étant définies par un détalonnage localisé dudit essieu.

Dans le cas d'une bague annulaire associée au pied de tube, on pourra prévoir que les portées annulaires partielles sont complétées par des portées alternées à simple appui du côté extérieur ou intérieur de la bague annulaire concernée.

Conformément à un autre mode d'exécution, les caractéristiques structurelles de la portée de centrage qui varient circonférentiellement concernent le matériau constitutif, conformément à une alternance de zones annulaires réalisées en des matériaux de raideurs différentes, ou dans un matériau qui est choisi anisotrope, lesdites zones annulaires étant agencées selon des plages angulaires prédéterminées. Par un choix judicieux du ou des matériaux concernés, on obtiendra ainsi les raideurs désirées dans les deux directions orthogonales concernées.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :

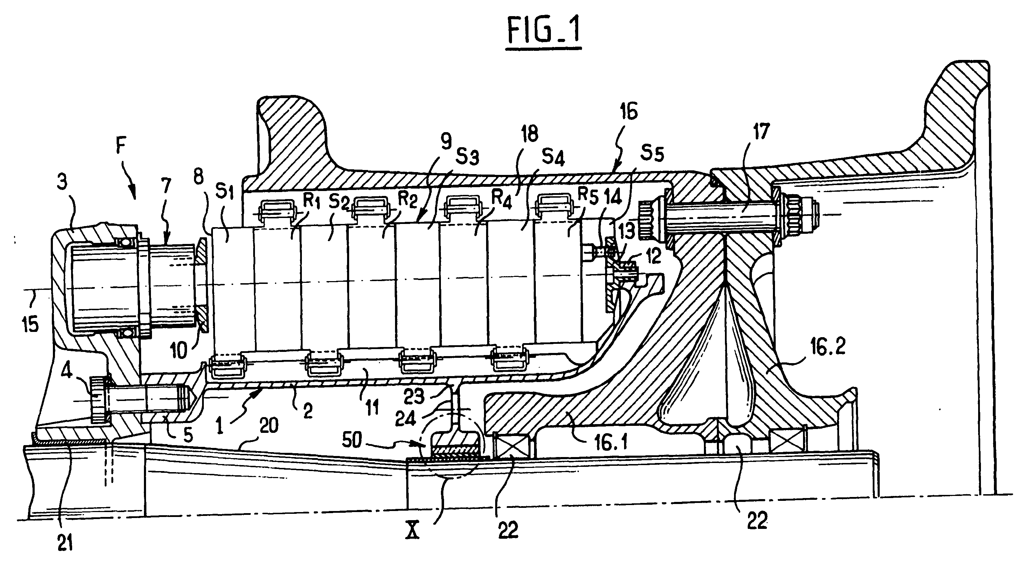

- la figure 1 est une demi-coupe axiale illustrant un système de freinage conforme à l'invention, avec une portée de centrage qui présente des caractéristiques structurelles variant circonférentiellement, laquelle portée, illustrée en coupe, est mieux visible sur la figure 10 qui est une vue partielle, à plus grande échelle, du détail X de la figure 1 ;

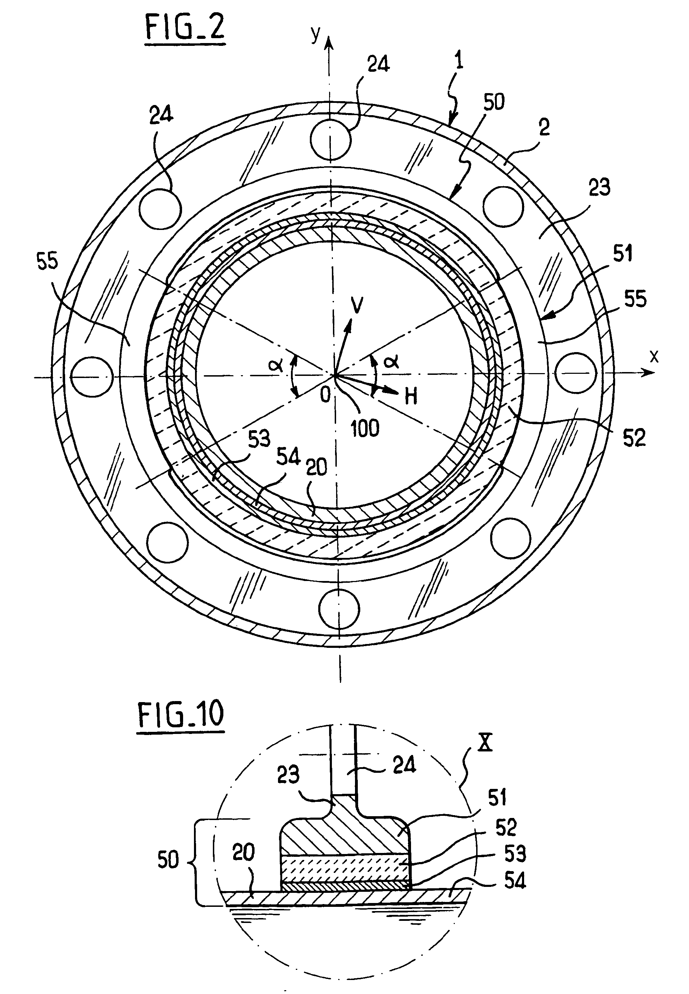

- la figure 2 est une coupe partielle du tube de torsion au voisinage du voile annulaire transversal de celui-ci, permettant de mieux distinguer l'agencement de portées annulaires partielles, en l'espèce deux portées, qui sont ici prévues sur le pied de tube ;

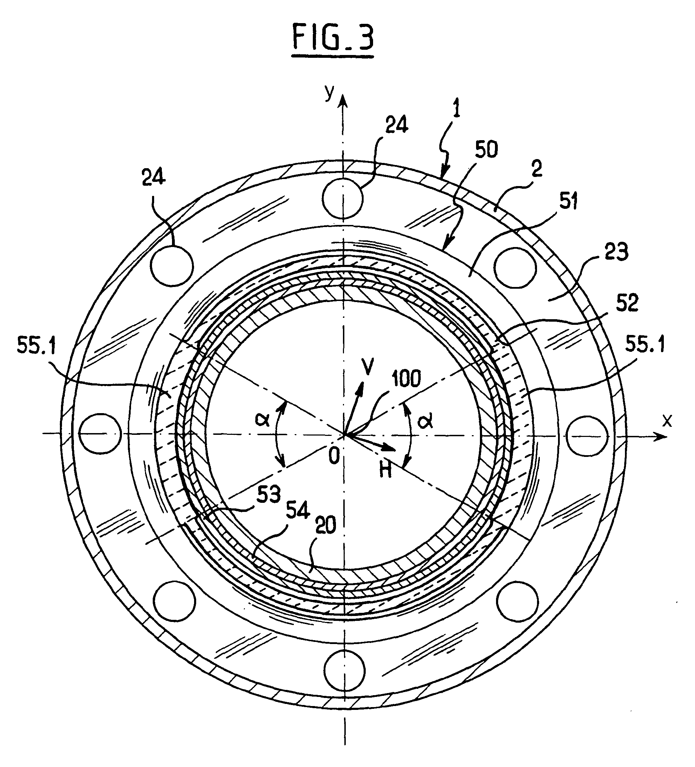

- les figures 3 à 7 sont des vues en coupe analogues à celle de la figure 2, illustrant différentes variantes dans lesquelles les portées annulaires partielles sont prévues sur une bague annulaire associée au pied de tube, lesdites portées étant prévues avec des plages angulaires ou avec des dispositions angulaires différentes ;

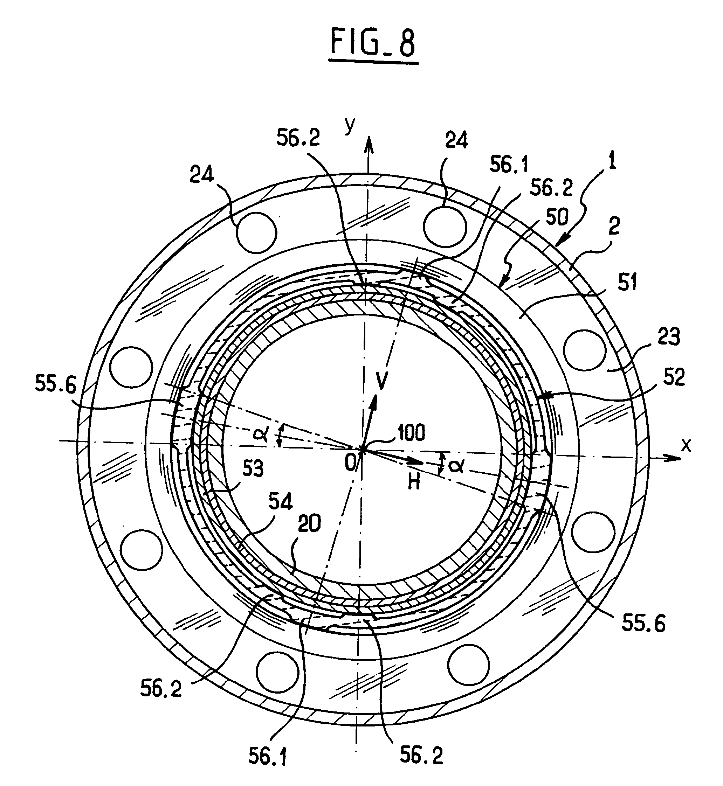

- la figure 8 illustre une autre variante dans laquelle les deux portées annulaires partielles sont décalées angulairement pour un rattrapage directionnel, et sont en outre complétées par des portées alternées à simple appui ; et

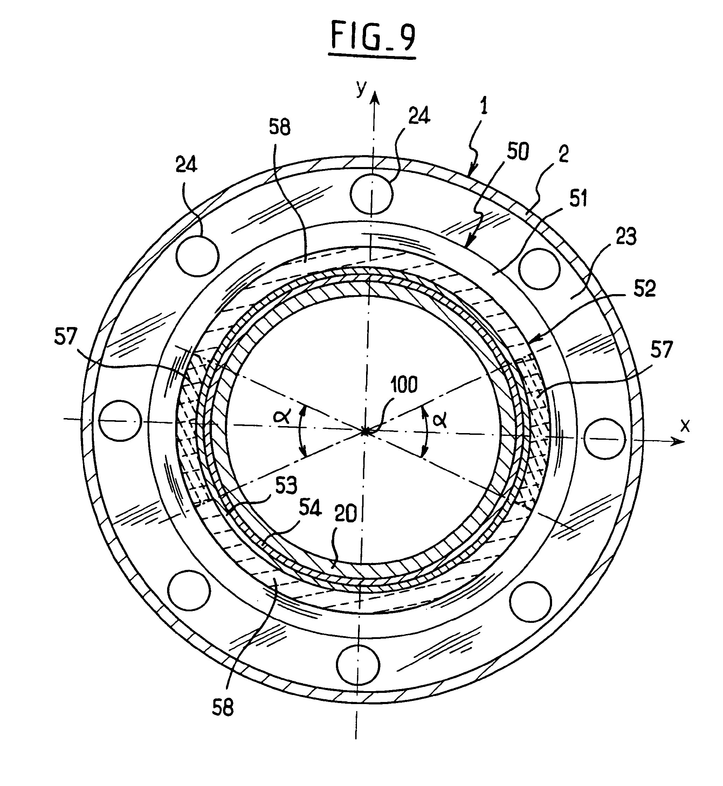

- la figure 9 est une coupe analogue illustrant une autre variante dans laquelle les différences de raideurs de la portée de centrage sont obtenues par une alternance de zones annulaires réalisées dans des matériaux de raideurs différentes ou dans un même matériau choisi anisotrope, en l'espèce pour une bague annulaire associée au pied de tube.

### DESCRIPTION DETAILLEE DE L'INVENTION

Sur la figure 1, on distingue une unité de freinage d'aéronef F comportant une partie centrale statorique 1 d'axe 100, incluant un tube de torsion 2 à l'avant duquel est fixée une couronne de freinage ou analogue 3, par exemple au moyen de boulons 4 se vissant sur une couronne terminale 5 dudit tube de torsion, cette couronne de freinage, de type hydraulique ou électrique, étant en l'espèce équipée d'une pluralité d'ensembles de pistons 7 capables d'une course d'usure prédéterminée grâce par exemple à un système de rattrapage d'usure qui est intégré. Chaque piston référencé 10 sert à transmettre les efforts de freinage, l'axe de l'ensemble de piston 7 représenté étant noté 15.

La partie centrale statorique 1 entoure coaxialement un essieu de roue 20 sur lequel est montée pour tourner une partie annulaire rotorique 16. On pourra par exemple prévoir, comme cela est fréquemment le cas, que la partie rotorique 16 est constituée de deux composants accolés 16.1, 16.2 réunis l'un à l'autre par des boulons 17, pour former une jante de roue. La partie annulaire rotorique 16 est montée pour tourner sur l'essieu 20 par l'intermédiaire de roulements associés 22.

Le système de freinage comporte en outre, de façon tout à fait classique, une succession de disques de frein qui sont agencés entre la partie centrale statorique 1 et la partie annulaire rotorique 16. Certains de ces disques sont couplés en rotation au tube de torsion 2 par des tenons axiaux associés tels que le tenon 11, ces disques étant référencés S1, S2, S3, S4, S5, tandis que d'autres disques, agencés en alternance avec les précédents, sont couplés en rotation à la partie annulaire rotorique 16 par des tenons axiaux associés 18, et ces derniers disques sont référencés R1, R2, R3, R4. L'empilement de disques Sᵢ, Rⱼ, noté 9, reçoit ainsi d'un côté les efforts de freinage au niveau de la face libre avant 8 dudit empilement par la face active des différents pistons 10, les différents disques constitutifs de l'empilement 9 ayant une mobilité par rapport aux tenons axiaux 11,18 associés, de façon à pouvoir se déplacer progressivement au fur et à mesure de leur usure. En l'espèce, le dernier disque S5, qui est couplé en rotation au tube de torsion 2, ne passe pas sur les tenons du tube de torsion comme c'est le cas habituellement, mais est relié audit tube de torsion par l'intermédiaire de pions de reprise de couple 13 qui sont circonférentiellement répartis, ces pions 13 étant fixés par des rivets 14 dans des réservations associées de la face arrière dudit disque, et accrochés sur une couronne associée 12 rigidement solidaire du tube de torsion 2.

La partie centrale statorique 1 est montée sur l'essieu 20 par une première portée prévue vers l'avant au niveau de la couronne de freinage 3, sous la forme d'une bague 21. En outre, le tube de torsion 2 présente intérieurement un voile annulaire transversal 23 qui est allégé par des perçages circulaires 24 répartis régulièrement sur sa circonférence, ainsi que cela est classique dans le domaine. Une seconde portée de centrage est alors interposée entre le voile annulaire 23 et l'essieu 20. Cette portée de centrage est référencée généralement 50 sur la figure 1.

Conformément à une caractéristique essentielle de l'invention, la portée de centrage précitée 50 présente des caractéristiques structurelles qui varient circonférentiellement selon une répartition propre à générer des raideurs d'appui différentes dans deux axes orthogonaux contenus dans un plan perpendiculaire à l'axe 100 de l'essieu 20.

Les différents composants formant la portée de centrage 50 sont mieux visibles sur le détail à échelle agrandie de la figure 10, correspondant au détail X de la figure 1. On distingue en effet successivement, en direction de l'axe de l'essieu, un pied de tube 51, qui est d'une pièce avec le voile annulaire transversal 23, puis une première bague 52 de préférence réalisée en matériau synthétique, puis une bague métallique 53, par exemple en bronze, les bagues 52 et 53 étant associées au pied de tube 51. On trouve en outre ici, bien que cela ne soit aucunement nécessaire, une bague supplémentaire 54, qui est une bague métallique analogue ici à un manchon de recouvrement, associée à l'essieu 20, et enfin la surface périphérique de l'essieu 20 lui-même.

Ainsi qu'on va le voir plus en détail ci-après, et conformément à une caractéristique de l'invention, les raideurs d'appui différentes pourront être prévues sur le pied de tube 51, ou sur l'une ou l'autre des bagues annulaires 52, 53, 54 précitées, ou encore sur l'essieu 20 lui-même.

Conformément à un premier mode de réalisation de l'invention, les caractéristiques structurelles de la portée de centrage 50 qui varient circonférentiellement concernent l'épaisseur radiale, de façon à définir au moins une portée annulaire partielle. Une telle approche est illustrée ici selon plusieurs variantes aux figures 2 à 8.

Sur la figure 2, il est prévu deux portées annulaires partielles 55 sur le pied de tube 51. Ces portées annulaires partielles 55, diamétralement opposées, sont définies par un détalonnage localisé du pied de tube 51. Les portées annulaires partielles 55 concernent une plage angulaire notée α qui est de préférence essentiellement comprise entre 15° et 60°.

Sur la figure 2, on a noté OX et OY deux axes orthogonaux qui sont contenus dans un plan perpendiculaire à l'axe 100 de l'essieu 20, et selon lesquels les épaisseurs radiales différentes du pied de tube 51 génèrent des raideurs d'appui différentes, avec une raideur élevée selon l'axe OX (qui est perpendiculaire à l'axe principal de la jambe de train), et une raideur plus faible selon l'axe OY (qui est parallèle à l'axe principal de la jambe de train) . Sur ce mode de réalisation, les bagues annulaires 52, 53, 54, présentent quant à elles une épaisseur radiale qui est constante sur toute leur circonférence.

On a également noté sur la figure 2 deux axes OH et OV qui correspondent respectivement aux directions horizontale et verticale réelles. Ce décalage par rapport aux axes OX, OY est là pour illustrer le cas où l'axe principal d'une jambe de train peut être légèrement incliné par rapport à la verticale.

On obtient ainsi deux raideurs d'appui différentes selon les axes OX, OY, avec par suite des modes propres de vibration notablement différents entre eux, ce qui est favorable pour minimiser les déformations de tournoiement.

La plage angulaire de 15° à 60° indiquée plus haut est donnée à titre d'exemple. Toutefois, si les portées annulaires partielles concernent une plage angulaire inférieure à 15°, le centrage de l'élément détalonné devient difficile à contrôler et si l'on dépasse la valeur de 60°, le mode correspondant à la rigidité moins élevée ne sera pas franchement différencié de l'autre mode.

Dans les variantes des figures 3 à 8, les portées annulaires partielles sont prévues non pas sur le pied de tube 51 comme c'était le cas dans la variante de la figure 2, mais sur la bague annulaire 52 parmi les bagues associées au pied de tube 51. Ces portées annulaires, en l'espèce au nombre de deux, sont par exemple définies par un détalonnage localisé de la bague annulaire 52. Là encore, les portées annulaires partielles concerneront de préférence une plage angulaire essentiellement comprise entre 15° et 60°.

Sur la figure 3, on a illustré deux portées annulaires diamétralement opposées 55.1, concernant une plage angulaire de 60°. Comme précédemment, la disposition d'ensemble par rapport à l'axe OY, qui correspond au plan vertical théorique de la couronne, est décalée angulairement par rapport aux directions horizontale et verticale réelles rappelées par les axes OH, OV.

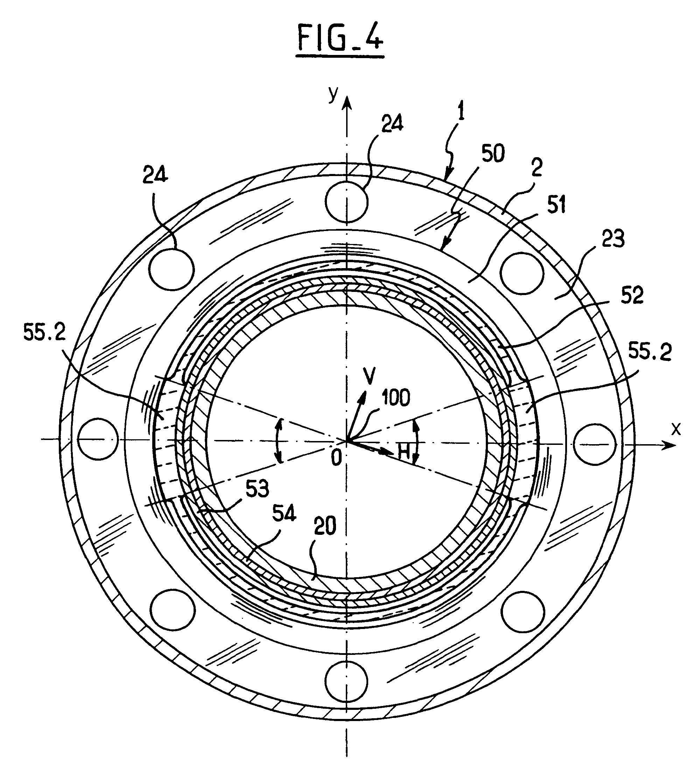

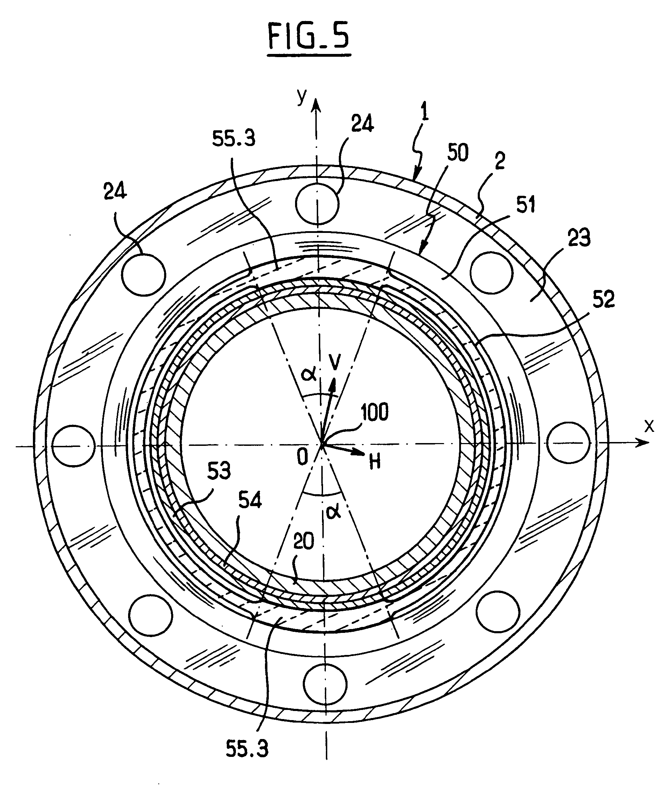

Sur la figure 4, on a illustré deux appuis symétriques 55.2 concernant une plage angulaire de 40°. Sur la figure 5, les deux appuis symétriques 55.3 concernent également une plage angulaire de 40°, mais sont disposés à 90° par rapport à la disposition précédente.

Ainsi, avec la figure 4, on a cherché à privilégier la raideur élevée dans la direction générale de la traînée, et la raideur plus faible dans la direction générale de la charge, tandis que dans la figure 5, on a au contraire cherché à privilégier la raideur élevée dans la direction générale de la charge, et la raideur plus faible dans la direction générale de la traînée.

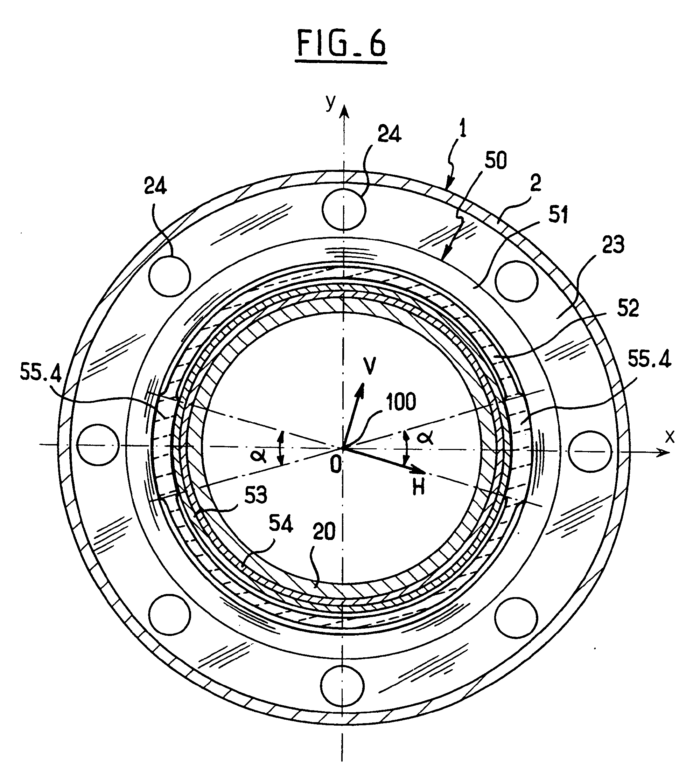

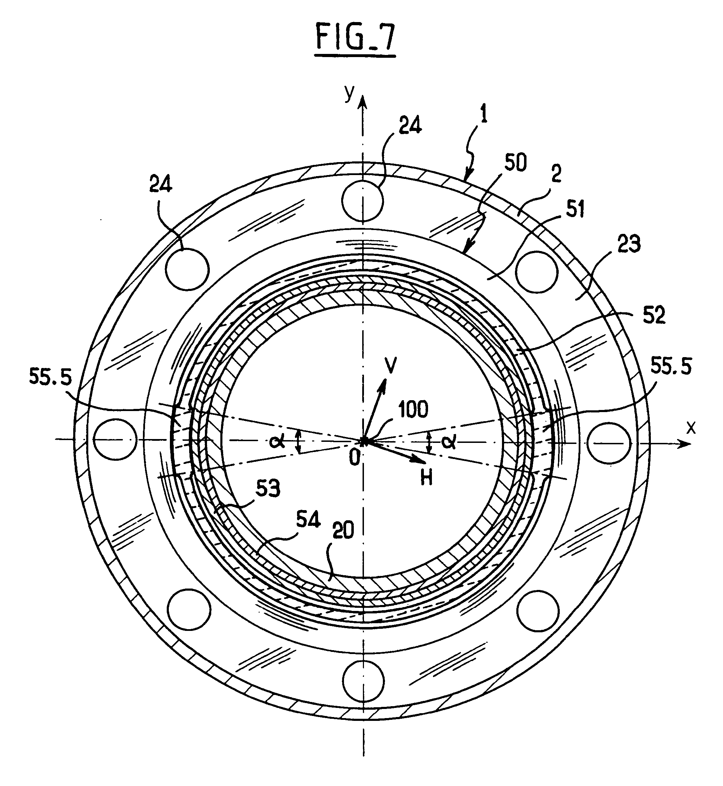

Sur la figure 6, les deux portées annulaires partielles 55.4, qui sont symétriques, concernent une plage angulaire de 30°, et, sur la figure 7, les deux portées annulaires partielles 55.5 concernent une plage angulaire de 20°.

Sur la figure 8, on a illustré une variante plus complexe comportant tout d'abord deux portées annulaires partielles 55.6 concernant une plage angulaire de l'ordre de 15°. Contrairement aux modes de réalisation précédents, ces portées annulaires partielles 55.6 sont décalées angulairement pour être centrées sur une direction correspondant sensiblement à une direction horizontale ou verticale réelle. En l'espèce, le décalage angulaire, qui est de l'ordre de 15°, permet un centrage sur une direction correspondant sensiblement à la direction horizontale réelle OH.

En outre, les deux portées annulaires partielles 55.6 sont complétées par des portées alternées 56.1, 56.2 à simple appui du côté extérieur ou intérieur de la bague annulaire 52 concernée. En l'espèce, on a prévu deux portées 56.1 diamétralement opposées avec appui du côté extérieur, et deux paires de portées 56.2 diamétralement opposées, agencées de part et d'autre de chaque portée 56.1, avec un appui du côté intérieur de la bague annulaire 52. Les portées annulaires partielles 55.6 et les portées alternées 56.1, 56.2 seront de préférence définies par un détalonnage localisé de la bague annulaire 52.

Les portées annulaires partielles qui viennent d'être décrites pour la bague annulaire 52 pourront naturellement être prévues sur l'autre bague 53 associée au pied de tube 51, ou sur la bague 54 qui est associée à l'essieu 20, ou encore sur l'essieu 20 lui-même. Ces variantes n'ont pas été illustrées ici, car l'on retrouve exactement les mêmes considérations que précédemment.

Dans les modes de réalisation précédemment décrits, les caractéristiques structurelles de la portée de centrage qui varient circonférentiellement concernaient l'épaisseur radiale, de façon à définir au moins une portée annulaire partielle. La même fonction peut cependant être assurée différemment, en prévoyant que les caractéristiques structurelles de la portée de centrage 50 qui varient circonférentiellement concernent le matériau constitutif, conformément à une alternance de zones annulaires réalisées en des matériaux de raideurs différentes ou en variante en un même matériau choisi anisotrope, lesdites zones annulaires étant agencées selon des plages angulaires prédéterminées.

Une telle variante est illustrée sur la figure 9, sur laquelle on distingue, pour constituer la bague annulaire 52, des zones annulaires 57, 58 réalisées en des matériaux de raideurs différentes. Les deux zones annulaires 57, diamètralement opposées, concernent une plage angulaire notée α qui sera également essentiellement comprise entre 15° et 60°, et lesdites zones seront par exemple réalisées en un matériau de raideur élevée. Les deux zones complémentaires 58 pourront alors être réalisées dans un autre matériau de raideur plus faible. En variante, on obtiendra le même effet avec un matériau constitutif choisi anisotrope. On pourra ainsi par exemple prévoir des zones réalisées au moyen d'un matériau fibreux bobiné pour avoir une rigidité élevée, et un matériau fibreux utilisant des fibres parallèles à l'axe de la bague pour les zones à rigidité plus faible. En variante, on pourra prévoir des fibres compressées alternativement dans une direction radiale et dans une direction axiale (matériau anisotrope).

Là encore, les différences de rigidités selon deux axes orthogonaux contenus dans un plan perpendiculaire à l'axe de l'essieu induisent la dissymétrie des raideurs recherchée, pour avoir deux modes propres largement différents l'un de l'autre qui se combinent en un mode résultant qui est favorable au regard des déformations de tournoiement.

La demanderesse a effectué des calculs visant à quantifier le découplage des modes réels intervenant dans le deuxième mode de tournoiement (« whirl »), découplage obtenu en fonction des différents agencements qui viennent d'être illustrés. C'est ainsi que l'on peut mentionner, pour les modes de réalisation des figures 3 à 8 respectivement, des découplages de l'ordre de 20 Hz, 10Hz, 40Hz, 58Hz, 68Hz, et 75Hz, alors qu'avec une conception traditionnelle, on obtient un découplage qui est seulement de l'ordre de 8 Hz. Ceci illustre bien l'avantage des caractéristiques structurelles variant circonférentiellement pour la portée de centrage.

On comprendra ainsi que le mode de réalisation illustré sur la figure 8, qui est le plus élaboré en combinant une paire de portées annulaires partielles décalées angulairement et une pluralité de portées alternées à simple appui, permet d'obtenir un découplage optimal pour le deuxième mode de tournoiement.

L'invention n'est pas limitée aux modes de réalisation qui viennent d'être décrits, mais englobent au contraire toute variante reprenant, avec des moyens équivalents les caractéristiques énoncées plus haut.

## Revendications

1. Système de freinage pour les roues portées par une jambe de train d'un train d'atterrissage d'aéronef, du type comportant pour chaque roue une partie centrale statorique (1) entourant coaxialement un essieu de roue (20) sur lequel est montée pour tourner une partie annulaire rotorique (16), et une succession de disques de frein (Sᵢ, Rⱼ) agencés entre la partie centrale statorique (1) et la partie annulaire rotorique (16) en étant alternativement couplés en rotation à l'une ou l'autre desdites parties, ladite partie centrale statorique comportant une couronne de freinage (3) équipée d'une pluralité d'ensembles de pistons (7) et, rigidement solidaire de ladite couronne, un tube de torsion (2) présentant intérieurement un voile annulaire transversal (23), une portée de centrage étant interposée entre le voile annulaire (23) et l'essieu (20), **caractérisé en ce que** la portée de centrage (50) présente des caractéristiques structurelles qui varient circonférentiellement selon une répartition propre à générer des raideurs d'appui différentes dans deux axes orthogonaux (OX, OY) contenus dans un plan perpendiculaire à l'axe (100) de l'essieu (20), et respectivement perpendiculaire et parallèle à l'axe principal de la jambe de train.

2. Système de freinage selon la revendication 1, **caractérisé en ce que** les caractéristiques structurelles de la portée de centrage (50) qui varient circonférentiellement concernent l'épaisseur radiale, de façon à définir au moins une portée annulaire partielle (55 ; 55.1 ; 55.2 ; 55.3 ; 55.4 ; 55.5 ; 55.6).

3. Système de freinage selon la revendication 2, **caractérisé en ce qu'**il est prévu un nombre pair de portées annulaires partielles (55 ; 55.1 ; 55.2 ; 55.3 ; 55.4 ; 55.5 ; 55.6), qui sont deux à deux diamétralement opposées.

4. Système de freinage selon la revendication 2 ou la revendication 3, **caractérisé en ce que** la ou les portées annulaires partielles (55 ; 55.1 ; 55.2 ; 55.3 ;55.4 ; 55.5 ; 55.6) concernent une plage angulaire essentiellement comprise entre 15° et 60°.

5. Système de freinage selon l'une des revendications 2 à 4, **caractérisé en ce que** la ou les portées annulaires partielles (55 ; 55.1 ; 55.2 ; 55.3 ; 55.4 ; 55.5 ; 55.6) sont décalées angulairement pour être centrées sur une direction correspondant sensiblement à une direction horizontale ou verticale réelle.

6. Système de freinage selon l'une des revendications 2 à 5, dans lequel la portée de centrage (50) est définie par un pied de tube (51) qui est d'une pièce avec le voile annulaire transversal (3), et au moins une bague annulaire (52, 53, 54) associée au pied de tube (51) ou à l'essieu (20), **caractérisé en ce que** les portées annulaires partielles (55) sont prévues sur le pied de tube (51), et sont définies par un détalonnage localisé dudit pied de tube.

7. Système de freinage selon l'une des revendications 2 à 5, dans lequel la portée de centrage (50) est définie par un pied de tube (51) qui est d'une pièce avec le voile annulaire transversal (3), et au moins une bague annulaire (52, 53, 54) associée au pied de tube (51) ou à l'essieu (20), **caractérisé en ce que** les portées annulaires partielles (55.1, 55.2, 55.3, 55.4, 55.5, 55.6) sont prévues sur une bague annulaire (52) associée au pied de tube (51), et sont définies par un détalonnage localisé de ladite bague annulaire.

8. Système de freinage selon la revendication 7, **caractérisé en ce que** les portées annulaires partielles (55.6) sont complétées par des portées alternées (56.1, 56.2) à simple appui du côté extérieur ou intérieur de la bague annulaire (52) concernée.

9. Système de freinage selon l'une des revendications 2 à 5, dans lequel la portée de centrage (50) est définie par un pied de tube (51) qui est d'une pièce avec le voile annulaire transversal (3), et au moins une bague annulaire (52, 53, 54) associée au pied de tube (51) ou à l'essieu (20), **caractérisé en ce que** les portées annulaires partielles sont prévues sur une bague annulaire (54) associée à l'essieu (20), et sont définies par un détalonnage localisé de ladite bague annulaire.

10. Système de freinage selon l'une des revendications 2 à 5, dans lequel la portée de centrage (50) est définie par un pied de tube (51) qui est d'une pièce avec le voile annulaire transversal (3), et au moins une bague annulaire (52, 53, 54) associée au pied de tube (51) ou à l'essieu (20), **caractérisé en ce que** les portées annulaires partielles sont prévues sur l'essieu (20), et sont définies par un détalonnage localisé dudit essieu.

11. Système de freinage selon la revendication 1, **caractérisé en ce que** les caractéristiques structurelles de la portée de centrage (50) qui varient circonférentiellement concernent le matériau constitutif, conformément à une alternance de zones annulaires (57, 58) réalisées en des matériaux de raideurs différentes, lesdites zones annulaires étant agencées selon des plages angulaires prédéterminées.

12. Système de freinage selon la revendication 1, **caractérisé en ce que** les caractéristiques structurelles de la portée de centrage (50) qui varient circonférentiellement concerne le matériau constitutif, lequel est choisi anisotrope de façon à présenter des zones annulaires (57, 58) de raideurs différentes, lesdites zones annulaires étant agencées selon des plages angulaires prédéterminées.

## Patentansprüche

1. Bremssystem für die von einem Fahrwerkbein eines Flugzeugfahrwerks getragenen Räder, der Art, die für jedes Rad umfasst: einen zentralen Statorabschnitt (1), der koaxial eine Radachse (20) umgibt, an der ein ringförmiger Rotorabschnitt (16) drehbar gelagert ist, und eine Reihe von Bremsscheiben (Sᵢ, Rⱼ), die zwischen dem zentralen Statorabschnitt (1) und dem ringförmigen Rotorabschnitt (16) angeordnet sind, indem sie abwechselnd an den einen bzw. den anderen dieser Abschnitte drehfest gekoppelt sind, wobei der zentrale Statorabschnitt einen Bremskranz (3) umfasst, der mit einer Vielzahl von Kolbeneinheiten (7) ausgestattet ist, sowie ein starr mit diesem Kranz verbundenes Torsionsrohr (2), das innen einen transversalen ringförmigen Steg (23) aufweist, wobei ein Zentriersitz zwischen dem ringförmigen Steg (23) und der Radachse (20) angeordnet ist, **dadurch gekennzeichnet, dass** der Zentriersitz (50) strukturelle Merkmale aufweist, die um den Umfang herum gemäß einer Verteilung variieren, die dazu geeignet ist, unterschiedliche Auflagesteifigkeiten in zwei orthogonalen Achsen (OX, OY) zu erzeugen, die in einer Ebene enthalten sind, die senkrecht zur Achse (100) der Radachse (20) ist, und senkrecht bzw. parallel zur Hauptachse des Fahrwerkbeins sind.

2. Bremssystem nach Anspruch 1, **dadurch gekennzeichnet, dass** die strukturellen Merkmale des Zentriersitzes (50), die um den Umfang herum variieren, die radiale Dicke betreffen, derart, dass sie mindestens einen ringförmigen Teilsitz (55; 55.1; 55.2; 55.3; 55.4; 55.5; 55.6) definieren.

3. Bremssystem nach Anspruch 2, **dadurch gekennzeichnet, dass** eine gerade Anzahl von ringförmigen Teilsitzen (55; 55.1; 55.2; 55.3; 55.4; 55.5; 55.6) vorgesehen ist, die sich paarweise diametral gegenüberliegen.

4. Bremssystem nach Anspruch 2 oder Anspruch 3, **dadurch gekennzeichnet, dass** der bzw. die ringförmigen Teilsitze (55; 55.1; 55.2; 55.3; 55.4; 55.5; 55.6) einen Winkelbereich betreffen, der im wesentlichen zwischen 15° und 60° liegt.

5. Bremssystem nach einem der Ansprüche 2 bis 4, **dadurch gekennzeichnet, dass** der bzw. die ringförmigen Teilsitze (55; 55.1; 55.2; 55.3; 55.4; 55.5; 55.6) winkelig versetzt sind, um in einer Richtung zentriert zu sein, die im wesentlichen einer reellen horizontalen oder vertikalen Richtung entspricht.

6. Bremssystem nach einem der Ansprüche 2 bis 5, bei dem der Zentriersitz (50) von einem Rohrfuß (51) definiert ist, der einstückig mit dem transversalen ringförmigen Steg (3) ist, sowie mindestens einem ringförmigen Reif (52, 53, 54), der mit dem Rohrfuß (51) oder der Radachse (20) verbunden ist, **dadurch gekennzeichnet, dass** die ringförmigen Teilsitze (55) an dem Rohrfuß (51) vorgesehen und von einer lokalisierten Aussparung des genannten Rohrfußes begrenzt sind.

7. Bremssystem nach einem der Ansprüche 2 bis 5, bei dem der Zentriersitz (50) von einem Rohrfuß (51) definiert ist, der einstückig mit dem transversalen ringförmigen Steg (3) ist, sowie mindestens einem ringförmigen Reif (52, 53, 54), der mit dem Rohrfuß (51) oder der Radachse (20) verbunden ist, **dadurch gekennzeichnet, dass** die ringförmigen Teilsitze (55.1, 55.2, 55.3, 55.4, 55.5, 55.6) an einem ringförmigen Reif (52) vorgesehen sind, der mit dem Rohrfuß (51) verbunden ist, und von einer lokalisierten Aussparung des genannten ringförmigen Reifs begrenzt sind.

8. Bremssystem nach Anspruch 7, **dadurch gekennzeichnet, dass** die ringförmigen Teilsitze (55.6) von wechselnden Sitzen (56.1, 56.2) mit einfacher Auflage auf der Außen- oder Innenseite des betreffenden ringförmigen Reifs (52) ergänzt werden.

9. Bremssystem nach einem der Ansprüche 2 bis 5, bei dem der Zentriersitz (50) von einem Rohrfuß (51) definiert ist, der einstückig mit dem transversalen ringförmigen Steg (3) ausgebildet ist, sowie mindestens einem ringförmigen Reif (52, 53, 54), der mit dem Rohrfuß (51) oder der Radachse (20) verbunden ist, **dadurch gekennzeichnet, dass** die ringförmigen Teilsitze an einem ringförmigen Reif (54) vorgesehen sind, der mit der Radachse (20) verbunden ist, und von einer lokalisierten Aussparung des ringförmigen Reifs begrenzt sind.

10. Bremssystem nach einem der Ansprüche 2 bis 5, bei dem der Zentriersitz (50) von einem Rohrfuß (51) definiert ist, der einstückig mit dem transversalen ringförmigen Steg (3) ausgebildet ist, und mindestens einem ringförmigen Reif (52, 53, 54), der mit dem Rohrfuß (51) oder der Radachse (20) verbunden ist, **dadurch gekennzeichnet, dass** die ringförmigen Teilsitze an der Radachse (20) vorgesehen und von einer lokalisierten Aussparung der Radachse begrenzt sind.

11. Bremssystem nach Anspruch 1, **dadurch gekennzeichnet, dass** die strukturellen Merkmale des Zentriersitzes (50), die um den Umfang herum variieren, das konstitutive Material betreffen, entsprechend einem Wechsel von ringförmigen Bereichen (57, 58), die aus Materialien unterschiedlicher Steifigkeit ausgebildet sind, wobei die ringförmigen Bereiche gemäß vorgegebenen Winkelbereichen angeordnet sind.

12. Bremssystem nach Anspruch 1, **dadurch gekennzeichnet, dass** die strukturellen Merkmale des Zentriersitzes (50), die um den Umfang herum variieren, das konstitutive Material betreffen, wobei dieses anisotrop gewählt wird, derart, dass es ringförmige Bereiche (57, 58) unterschiedlicher Steifigkeit aufweist, wobei die ringförmigen Bereiche gemäß vorgegebenen Winkelbereichen angeordnet sind.

## Claims

1. A brake system for braking the wheels carried by an aircraft landing gear leg, the brake system being of the type which, for each wheel, comprises a stator central portion (1) coaxially surrounding a wheel axle (20) on which a rotor annular portion (16) is mounted to rotate, and a succession of brake disks (Sᵢ, Rⱼ) disposed between the stator central portion (1) and the rotor annular portion (16) with alternate disks being constrained to rotate with one and the other of said portions, said stator central portion being provided with a brake collar (3) equipped with a plurality of sets of pistons (7) and, rigidly secured to said collar, a torsion tube (2) internally provided with a transverse annular web (23), a centering bearing being interposed between the annular web (23) and the axle (20), said brake system being **characterized in that** the centering bearing (50) has structural characteristics that vary circumferentially in a distribution configuration suitable for generating different bearing stiffnesses along two orthogonal axes (OX, OY) contained in a plane that is perpendicular to the axis (100) of the axle (20) and respectively perpendicular and parallel to the main axis of the landing gear leg.

2. A brake system according to claim 1, **characterized in that** the structural characteristics of the centering bearing (50) that vary circumferentially relate to the radial thickness, so as to define at least one partial annular bearing (55; 55.1; 55.2; 55.3, 55.4; 55.5; 55.6).

3. A brake system according to claim 2, **characterized in that** an even number of partial annular bearings (55; 55.1; 55.2; 55.3; 55.4; 55.5; 55.6) are provided that are diametrically opposite in pairs.

4. A brake system according to claim 2 or claim 3, **characterized in that** the partial annular bearing or each of the partial annular bearings (55; 55.1; 55.2; 55.3; 55.4; 55.5; 55.6) extends over an angular sector essentially lying in the range 15° to 60°.

5. A brake system according to any one of claims 2 to 4, **characterized in that** the partial annular bearing(s) (55; 55.1; 55.2; 55.3; 55.4; 55.5; 55.6) is/are offset angularly so as to be centered on a direction corresponding substantially to a real horizontal or vertical direction.

6. A brake system according to any one of claims 2 to 5, in which the centering bearing (50) is defined by a tube foot (51) which is formed integrally with the transverse annular web (3), and by at least one annular ring (52, 53, 54) associated with the tube foot (51) or with the axle (20), said brake system being **characterized in that** the partial annular bearings (55) are provided on the tube foot (51), and are defined by locally recessing said tube foot.

7. A brake system according to any one of claims 2 to 5, in which the centering bearing (50) is defined by a tube foot (51) which is formed integrally with the transverse annular web (3), and at least one annular ring (52, 53, 54) associated with the tube foot (51) or with the axle (20), said brake system being **characterized in that** the partial annular bearings (55.1, 55.2, 55.3, 55.4, 55.5, 55.6) are provided on an annular ring (52) associated with the tube foot (51), and are defined by locally recessing said annular ring.

8. A brake system according to claim 7, **characterized in that** the partial annular bearings (55.6) are supplemented by alternating bearings (56.1, 56.2), each of which has a single bearing surface either on the outside or on the inside of the annular ring (52) in question.

9. A brake system according to any one of claims 2 to 5, in which the centering bearing (50) is defined by a tube foot (51) which is formed integrally with the transverse annular web (3), and at least one annular ring (52, 53, 54) associated with the tube foot (51) or with the axle (20), said brake system being **characterized in that** the partial annular bearings are provided on an annular ring (54) associated with the axle (20), and are defined by locally recessing said annular ring.

10. A brake system according to any one of claims 2 to 5, in which the centering bearing (50) is defined by a tube foot (51) which is formed integrally with the transverse annular web (3), and at least one annular ring (52, 53, 54) associated with the tube foot (51) or with the axle (20), said brake system being **characterized in that** the partial annular bearings are provided on the axle (20), and are defined by locally recessing said axle.

11. A brake system according to claim 1, **characterized in that** the structural characteristics of the centering bearing (50) that vary circumferentially relate to the component material, by alternating annular zones (57, 58) made of materials of different stiffnesses, said annular zones being disposed over predetermined angular sectors.

12. A brake system according to claim 1, **characterized in that** the structural characteristics of the centering bearing (50) that vary circumferentially relate to the component material which is selected to be anisotropic so as to have annular zones (57, 58) of different stiffnesses, said annular zones being disposed over predetermined angular sectors.
